Europäisches Patentamt

European Patent Office

Office européen des brevets

(11)　EP 1 186 843 B1

(19)

(12)　**FASCICULE DE BREVET EUROPEEN**

(45) Date de publication et mention
de la délivrance du brevet:
**21.12.2005　Bulletin 2005/51**

(51) Int Cl.⁷: **F25J 3/02**, B01J 19/32

(21) Numéro de dépôt: **01402265.1**

(22) Date de dépôt: **30.08.2001**

(54) **Colonne à garnissage d'échange de chaleur et/ou de matière**

Säule mit Füllung zur Wärme- und/oder Massenübertragung

Packing column for heat and/or mass transfer

(84) Etats contractants désignés:
**DE FR GB**

(30) Priorité: **11.09.2000　FR 0011516**

(43) Date de publication de la demande:
**13.03.2002　Bulletin 2002/11**

(73) Titulaire: **L'air Liquide, S.A. à Directoire et Conseil
de Surveillance pour l'Etude et l'Exploitation des
Procédés Georges Claude
75321 Paris Cedex 07 (FR)**

(72) Inventeur: **Werlen, Etienne
75015 Paris (FR)**

(74) Mandataire: **Mercey, Fiona Susan et al
L'Air Liquide,
Service Brevets et Marques,
75, quai d'Orsay
75321 Paris Cédex 07 (FR)**

(56) Documents cités:
**EP-A- 0 845 293　　　EP-A- 1 016 457
WO-A-97/16247　　　US-A- 5 224 351**

## Description

La présente invention est relative à une colonne à garnissage d'échange de chaleur et/ou de matière entre un liquide descendant et un gaz montant, du type comprenant au moins une section d'échange définie entre un distributeur supérieur associé de liquide et une entrée/sortie inférieure de fluide ou un distributeur inférieur associé de liquide, cette section d'échange comprenant un tronçon supérieur et, sous celui-ci, un autre tronçon. Elle s'applique en particulier aux colonnes de distillation d'air. Une telle colonne est connue par exemple du EP-A-1016457

On entend ici par garnissage un dispositif destiné à la mise en contact intime d'un liquide descendant et d'un gaz montant, afin que se produise un échange de chaleur et/ou de matière.

Les tronçons de garnissage sont constitués chacun d'au moins un module ou « pack » de garnissage. Ces modules peuvent être du type vrac, c'est-à-dire constitués chacun d'un volume de particules discrètes, mais sont de préférence d'un type dit structuré. Dans cette catégorie figurent en particulier :

(1) Les garnissages ondulés-croisés, généralement constitués par des bandes ondulées comprenant des ondulations alternées parallèles disposées chacune dans un plan général vertical et les unes contre les autres, les ondulations étant obliques et descendant dans des sens opposés d'une bande à la suivante. Un taux de perforation typiquement d'environ 10% est généralement prévu pour ces garnissages dits ondulés-croisés.

Le GB-A-1 004 046 divulgue des garnissages du type ondulé-croisé, et le CA-A-1 095 827 propose une amélioration de ce type de garnissage en ajoutant une perforation dense de petit diamètre pour permettre au liquide de transiter de part et d'autre des bandes ondulées croisées.

Un tel garnissage est généralement fabriqué à partir d'un produit plat, à savoir de feuilles métalliques sous forme de bandes. Les bandes sont d'abord pliées (ou cintrées) de façon à former une sorte de tôle ondulée en bande dont les ondulations sont obliques par rapport à l'axe de la bande. Les bandes pliées sont ensuite découpées en tronçons puis empilées en retournant alternativement une bande sur deux, de façon à former des modules ou « packs ».

(2) Les garnissages à ventilateurs, dont chaque module comprend une pluralité de déflecteurs qui définissent un ensemble de couches horizontales de ventilateurs fixes de brassage du gaz montant.

Ces garnissages à ventilateurs sont des structures à effet tridimensionnel vis-à-vis du gaz qui monte dans la colonne. Elles assurent, par mise en rotation multiple du gaz, une forte turbulence de ce gaz, et le brassage résultant améliore l'échange de chaleur et/ou de matière avec le liquide descendant.

Des exemples de tels packs de garnissage sont décrits dans le WO-A-86/06 296, dans le WO-A-90/10 497 et dans le EP-A-845 293.

L'invention a pour but de réduire le coût des colonnes d'échange de chaleur et/ou de matière à garnissage.

A cet effet, l'invention a pour objet une colonne à garnissage du type précité, caractérisée en ce que le tronçon de garnissage supérieur d'au moins une section d'échange comprend au moins un module de garnissage qui possède un nombre d'unités de transfert inférieur à celui d'au moins un module de garnissage de l'autre tronçon de garnissage de la même section d'échange.

Comme il est bien connu dans la technique, le nombre d'unités de transfert en phase vapeur (NUT) d'un module de garnissage est le quotient de la hauteur du module (HM) par la hauteur d'une unité de transfert en phase vapeur (HUT). La HUT est couramment utilisée pour caractériser l'efficacité intrinsèque d'un garnissage, elle est reliée à la hauteur équivalente à un plateau théorique (HEPT) de ce même garnissage par la relation :

$$HEPT = HUT \cdot \frac{m.V/L\text{-}1}{\ln(m.V/L)}$$

où

L : débit molaire de liquide (mol/s)
V : débit molaire de vapeur (mol/s)
m : pente de la droite d'équilibre dans un digramme représentant la fraction molaire dans la vapeur en fonction de la fraction molaire dans le liquide.

La HUT, et donc le NUT d'un module de garnissage, dépendent modérément des fluides distillés et des conditions de distillation. Toutefois, lorsque dans ce texte on comparera les NUTs de deux modules de garnissage, il sera à chaque fois sous-entendu que l'on place ces deux modules dans des conditions de distillation identiques. De plus, par souci de simplification, on appellera dans ce texte le nombre d'unités de transfert en phase vapeur : nombre d'unités de transfert.

La colonne à garnissage suivant l'invention peut comporter une ou plusieurs des caractéristiques suivantes, prises isolément ou suivant toutes les combinaisons techniquement possibles :

- ledit module dudit tronçon supérieur diffère dudit module dudit autre tronçon de la même section d'échange par l'un au moins des facteurs suivants :

. sa densité intrinsèque ;
. sa structure ;
. sa densité moyenne sur la section transversale de la colonne ; et

. sa hauteur ;

- ledit facteur est la densité moyenne, et ledit tronçon supérieur n'occupe qu'une fraction de la section transversale de la colonne, située sous les jets de liquide provenant dudit distributeur supérieur ;
- lesdits tronçons de garnissage sont des tronçons de garnissage structuré ;
- ledit tronçon de garnissage supérieur est un tronçon de garnissage ondulé-croisé, tandis que l'autre tronçon de garnissage est un tronçon de garnissage à ventilateurs ;
- ledit tronçon de garnissage supérieur est un tronçon de garnissage ondulé-croisé de relativement faible densité, tandis que l'autre tronçon de garnissage est un tronçon de garnissage ondulé-croisé de plus forte densité, les modules de garnissage étant décalés angulairement, notamment de 90°, les uns par rapport aux autres autour de l'axe central vertical de la colonne ;
- ledit tronçon de garnissage supérieur est constitué d'un module de garnissage unique ;
- ledit module unique a une hauteur plus faible que celle des modules de l'autre tronçon de la même section d'échange ;
- dans chaque section d'échange, les modules de garnissage sont empilés les uns sur les autres, directement ou avec interposition d'éléments formant entretoises ;
- la colonne fait partie d'une double colonne de distillation d'air ; et
- l'autre tronçon est un tronçon courant.

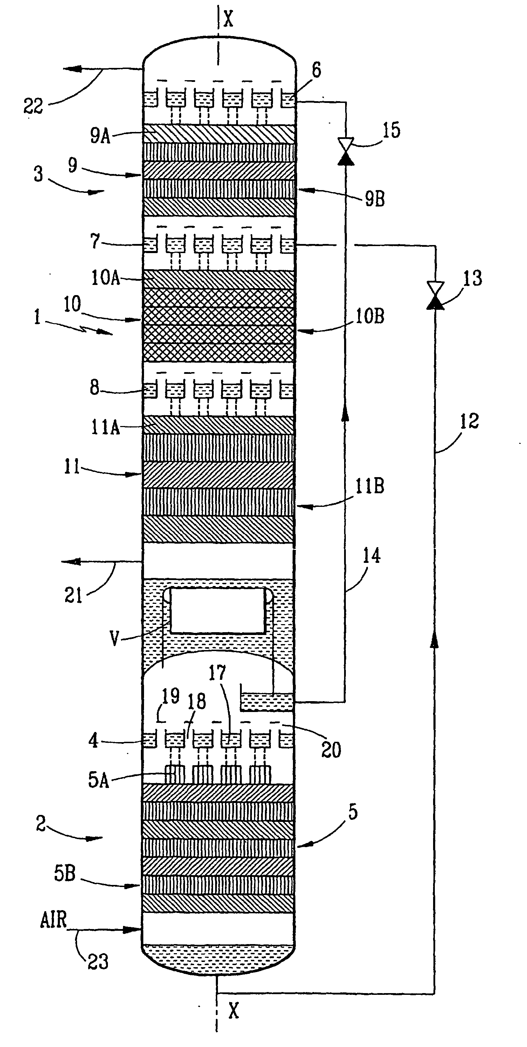

Un exemple de réalisation de l'invention va maintenant être décrit en regard des dessins annexés, dont la Figure unique représente schématiquement en coupe axiale une double colonne de distillation d'air conforme à l'invention.

La double colonne de distillation d'air 1 représentée sur le dessin, d'axe central X-X vertical, a une structure classique à l'exception de la constitution de ses garnissages. Elle est ainsi constituée d'une colonne moyenne pression 2 surmontée d'une colonne basse pression 3. Un vaporiseur-condenseur principal V met la vapeur de tête de la colonne 2 (azote à peu près pur) en relation d'échange thermique avec le liquide de cuve (oxygène à peu près pur) de la colonne 3.

La colonne 2 comporte un distributeur de liquide de tête 4 et, sous celui-ci, une section de distillation d'air unique 5.

La colonne 3 comporte : un distributeur de liquide de tête 6 ; un distributeur de liquide intermédiaire supérieur 7 ; un distributeur de liquide intermédiaire inférieur 8 ; une section de distillation supérieure 9 située entre les distributeurs 6 et 7 ; une section de distillation intermédiaire 10 située entre les distributeurs 7 et 8 ; et une section de distillation inférieure 11 située sous le distributeur 8.

En fonctionnement, l'air à distiller, comprimé à la moyenne pression, typiquement de l'ordre de 5 bars absolus, est introduit en cuve de la colonne 2. Du « liquide riche » (air enrichi en oxygène) recueilli en cuve de cette colonne est soutiré via une conduite 12, détendu à la basse pression, qui est de l'ordre de 1,2 bar absolu, dans une vanne de détente 13, et introduit dans le distributeur 7.

Du « liquide pauvre » de tête de la colonne 2, constitué d'azote liquide, est soutiré via une conduite 14, détendu à basse pression dans une vanne de détente 15 et introduit dans le distributeur 6. L'excès d'azote liquide condensé dans le vaporiseur-condenseur V tombe dans le distributeur 4, lequel le distribue sur la section de distillation 5. Dans celle-ci, l'air entrant monte et échange de la chaleur et de la matière avec l'azote liquide de reflux en s'appauvrissant progressivement en oxygène.

Dans la colonne 2, le gaz montant est de l'oxygène gazeux, qui échange de la chaleur et de la matière avec le liquide de reflux. Le distributeur 6 distribue de l'azote liquide sur la section de distillation 9. Le distributeur 7 distribue sur la section de distillation 10 le liquide riche provenant de la vanne 13 ainsi que le liquide sensiblement de même composition qui tombe de la section 9. Le distributeur 8 sert à redistribuer sur toute la section transversale de la colonne 3 le liquide de reflux qui sort de la section 10, pour améliorer l'efficacité de la distillation et parer aux effets de paroi par lesquels le liquide, après avoir traversé une certaine hauteur de garnissage, tend à ruisseler sur la paroi intérieure de la virole de la colonne.

Bien entendu, en variante, d'autres distributeurs de redistribution tels que le distributeur 8 peuvent être prévus, suivant les types de garnissage et la hauteur de la colonne.

Chaque distributeur de liquide 4, 6, 7, 8 comporte une goulotte périphérique 16 et plusieurs goulottes parallèles à section en U 17 qui débouchent à chaque extrémité dans la goulotte 16. Entre les goulottes 16 sont définis des canaux parallèles 18 pour le passage du gaz montant, fermés par une paroi supérieure horizontale 19. Juste sous cette paroi sont ménagées des rangées de fenêtres 20. Le fond des goulottes 17 est perforé, ce qui définit un grand nombre de jets verticaux de liquide sous chacune de ces goulottes.

La double colonne 1 comporte encore au moins une sortie de produit telle qu'une conduite 21 de soutirage d'oxygène gazeux de la cuve de la colonne 2, située juste au-dessous de la section 11, et une conduite 22 de soutirage de gaz résiduaire (azote impur) qui part du sommet de la colonne 3. La conduite d'entrée d'air en cuve de la colonne 2 est indiquée en 23.

Chacune des sections de distillation 5, 9, 10, 11 st constituée d'un empilage de modules de garnissage structurés. Le module supérieur constitue le tronçon supérieur 5A, 9A, 10A, 11A de la section, tandis que les autres modules forment le tronçon courant 5B, 9B, 10B, 11B de la section. Les modules sont empilés soit directement les uns sur les autres, soit avec interposition d'éléments formant entretoises.

Chaque tronçon supérieur est constitué par un module ou « pack » de garnissage plus particulièrement adapté pour répartir uniformément sur toute la section transversale de la colonne le liquide qu'il reçoit du distributeur qui l'alimente, tandis que les modules de chaque autre tronçon sont plus particulièrement adaptés pour réaliser un échange de chaleur de matière à haute efficacité entre ce liquide et le gaz montant.

Ainsi, on peut fournir les exemples suivants :

(1) Le tronçon supérieur peut être de même nature que l'autre tronçon mais avoir une densité intrinsèque (m² de métal/m³) inférieure. On remplit ainsi la fonction d'étalement du liquide à moindre coût car la quantité de métal utilisé est plus petite.

(2) Le tronçon supérieur peut être d'une nature différente de celle de l'autre tronçon, à savoir de moindre efficacité du point de vue de la distillation et moins coûteuse. En particulier, le tronçon supérieur peut être du type ondulé-croisé, notamment à faible densité, tandis que le tronçon courant est du type à ventilateurs.

(3) Le tronçon supérieur peut être un module de garnissage dont la hauteur est plus faible que celle des modules des tronçons inférieurs. De cette manière, on réduit la hauteur de la colonne sans pénaliser substantiellement l'efficacité globale de la distillation, puisque le tronçon supérieur n'est pas pleinement efficace.

(4) Le tronçon supérieur peut ne pas s'étendre sur toute la section transversale de la colonne. En particulier, il peut être limité aux régions qui reçoivent les jets de liquide du distributeur associé. Dans ce cas, à nature identique, le tronçon supérieur possède une densité moyenne inférieure à celle du tronçon courant.

Ces diverses possibilités peuvent se combiner entre elles. De plus, dans les cas (1) et (2), le tronçon supérieur peut être constitué de plus d'un module de garnissage.

Dans chacun des cas ci-dessus, le tronçon supérieur possède, pour chacun de ses modules, un nombre d'unités de transfert inférieur à celui de chaque module de l'autre tronçon.

En effet :

- cas (1) : La réduction de la densité intrinsèque abaisse le nombre d'unités de transfert pour une hauteur donnée des modules.
- cas (2) : Par définition, la moindre efficacité de distillation correspond à un moindre nombre d'unités de transfert.
- cas (3) : La réduction de hauteur d'un module réduit son nombre d'unités de transfert.
- cas (4) : Le fait de supprimer une partie de la section active d'un module réduit son nombre d'unités de transfert.

Dans l'exemple représenté au dessin, le tronçon supérieur de chaque section de distillation est un module unique de garnissage ondulé-croisé.

Le tronçon supérieur 5A de la section 5 est discontinu. Il est constitué de plusieurs bandes parallèles dont chacune est située au-dessous d'une goulotte 17 correspondante du distributeur 4. L'autre tronçon 5B est un tronçon courant constitué d'un empilage de modules de garnissage ondulé-croisé. Les modules de la section 5 sont décalés angulairement de 90° les unes par rapport aux autres autour de l'axe X-X.

Le tronçon 9B de la section 9 est un tronçon courant constitué d'un empilement de modules de garnissage ondulé-croisé dont la densité est plus grande que celle du tronçon supérieur 9A. Les modules de la section 9 sont décalés angulairement de 90° les uns par rapport aux autres autour de l'axe X-X.

Le tronçon 10B de la section 10 est un tronçon courant constitué d'un empilage de modules de garnissage du type à ventilateurs. Ces modules sont décalés angulairement de 90° les uns par rapport aux autres autour de l'axe X-X.

Le tronçon 11B de la section 11 est un tronçon courant constitué d'un empilage de modules de garnissage ondulés-croisés de même densité que celle du tronçon supérieur 11A, mais de plus grande hauteur que celui-ci. Les modules de la section 11 sont également décalés angulairement de 90° les uns par rapport aux autres autour de l'axe X-X.

## Revendications

**1.** Colonne à garnissage d'échange de chaleur et/ou de matière entre un liquide descendant et un gaz montant, du type comprenant au moins une section d'échange (5, 9, 10, 11) définie entre un distributeur supérieur associé de liquide (4, 6, 7, 8) et une entrée/sortie inférieure de fluide (21, 23) ou un distributeur inférieur associé de liquide (7, 8), cette section d'échange comprenant un tronçon supérieur (5A, 9A, 10A, 11A) et, sous celui-ci, un autre tronçon (5B, 9B, 10B, 11B), **caractérisée en ce que** le tronçon de garnissage supérieur (5A, 9A, 10A, 11A) d'au moins une section d'échange (5, 9, 10, 11) comprend au moins un module de garnissage qui possède un nombre d'unités de transfert inférieur à celui d'au moins un module de garnissage de l'autre tronçon de garnissage (5B, 9B, 10B, 11B) de la même section d'échange.

**2.** Colonne suivant la revendication 1, **caractérisée en ce que** ledit module dudit tronçon supérieur (5A, 9A, 10A, 11A) diffère dudit module dudit autre tronçon (5B, 9B, 10B, 11B) de la même section d'échange par l'un au moins des facteurs suivants :

- sa densité intrinsèque ;
- sa structure ;
- sa densité moyenne sur la section transversale de la colonne ; et
- sa hauteur.

**3.** Colonne suivant la revendication 2, **caractérisée en ce que** ledit facteur est la densité moyenne, et **en ce que** ledit tronçon supérieur (5A) n'occupe qu'une fraction de la section transversale de la colonne, située sous les jets de liquide provenant dudit distributeur supérieur (4).

**4.** Colonne suivant l'une quelconque des revendications 1 à 3, **caractérisée en ce que** lesdits tronçons de garnissage (5A, 5B,9A, 9B, 10A, 10B, 11A, 11B) sont des tronçons de garnissage structuré.

**5.** Colonne suivant la revendication 4, **caractérisée en ce que** ledit tronçon de garnissage supérieur (10A) est un tronçon de garnissage ondulé-croisé, tandis que l'autre tronçon de garnissage est un tronçon de garnissage à ventilateurs (10B).

**6.** Colonne suivant la revendication 4, **caractérisée en ce que** ledit tronçon de garnissage supérieur (9A) est un tronçon de garnissage ondulé-croisé de relativement faible densité, tandis que l'autre tronçon de garnissage est un tronçon de garnissage ondulé-croisé de plus forte densité, les modules de garnissage étant éventuellement décalés angulairement, notamment de 90°, les uns par rapport aux autres autour de l'axe central vertical (X-X) de la colonne.

**7.** Colonne suivant l'une quelconque des revendications 1 à 6, **caractérisée en ce que** ledit tronçon de garnissage supérieur (5A, 9A, 10A, 11A) est constitué d'un module de garnissage unique.

**8.** Colonne suivant les revendications 2 et 7 prises ensemble, **caractérisée en ce que** ledit module unique (11A) a une hauteur plus faible que celle des modules de l'autre tronçon (11B) de la même section d'échange (11).

**9.** Colonne suivant l'une quelconque des revendications 1 à 8, **caractérisée en ce que**, dans chaque section d'échange (5, 10, 11), les modules de garnissage sont empilés les uns sur les autres, directement ou avec interposition d'éléments formant entretoises.

**10.** Colonne suivant l'une quelconque des revendications 1 à 9, **caractérisée en ce qu'**elle fait partie d'une double colonne de distillation d'air (1).

**Patentansprüche**

**1.** Füllkörpersäule zum Wärme- und/oder Materialaustausch zwischen einer absteigenden Flüssigkeit und einem aufsteigenden Gas, umfassend mindestens einen Austauschbereich (5, 9, 10, 11), der zwischen einem zugehörigen oberen Verteiler von Flüssigkeit (4, 6, 7, 8) und einem unteren Eintritt/ Austritt von Fluid (21, 23) oder einem zugehörigen unteren Verteiler von Flüssigkeit (7, 8) definiert ist, wobei dieser Austauschbereich einen oberen Abschnitt (5A, 9A, 10A, 11A) und unter diesem einen weiteren Abschnitt (5B, 9B, 10B, 11B) umfasst, **dadurch gekennzeichnet, dass** der obere Füllkörperabschnitt (5A, 9A, 10A, 11A) von mindestens einem Austauschbereich (5, 9, 10, 11) mindestens ein Füllkörpermodul umfasst, das eine geringere Anzahl von Weiterleitungseinheiten als jenes von mindestens einem Füllkörpermodul des anderen Füllkörperabschnittes (5B, 9B, 10B, 11B) desselben Austauschbereichs umfasst.

**2.** Säule nach Anspruch 1, **dadurch gekennzeichnet, dass** sich das Modul des oberen Abschnitts (5A, 9A, 10A, 11A) von dem Modul des anderen Abschnitts (5B, 9B, 10B, 11B) desselben Austauschbereichs durch mindestens einen der folgenden Faktoren unterscheidet:

- seine innere Dichte,
- seine Struktur,
- seine durchschnittliche Dichte auf dem Querschnitt der Säule, und
- seine Höhe.

**3.** Säule nach Anspruch 2, **dadurch gekennzeichnet, dass** der Faktor die durchschnittliche Dichte ist, und dass der obere Abschnitt (5A) nur einen Bruchteil des Querschnitts der Säule einnimmt, der sich unter den vom oberen Verteiler (4) kommenden Flüssigkeitsstrahlen befindet.

**4.** Säule nach einem der Ansprüche 1 bis 3, **dadurch gekennzeichnet, dass** die Füllkörperabschnitte (5A, 5B, 9A, 9B, 10A, 10B, 11A, 11B) strukturierte Füllkörperabschnitte sind.

**5.** Säule nach Anspruch 4, **dadurch gekennzeichnet, dass** der obere Füllkörperabschnitt (10A) ein wellig-gekreuzter Füllkörperabschnitt ist, während der andere Füllkörperabschnitt ein Füllkörperabschnitt mit Ventilatoren (10B) ist.

**6.** Säule nach Anspruch 4, **dadurch gekennzeich-**

**net, dass** der obere Füllkörperabschnitt (9A) ein wellig-gekreuzter Füllkörperabschnitt mit relativ geringer Dichte ist, während der andere Füllkörperabschnitt ein wellig-gekreuzter Füllkörperabschnitt mit größerer Dichte ist, wobei die Füllkörpermodule eventuell winkelig, insbesondere um 90°, zueinander um die vertikale Mittelachse (X-X) der Säule versetzt sind.

7. Säule nach einem der Ansprüche 1 bis 6, **dadurch gekennzeichnet, dass** der obere Füllkörperabschnitt (5A, 9A, 10A, 11A) von einem einzigen Füllkörpermodul gebildet ist.

8. Säule nach den Ansprüchen 2 und 7 gemeinsam, **dadurch gekennzeichnet, dass** das einzige Modul (11A) eine geringere Höhe als jene der Module des anderen Abschnitts (11B) desselben Austauschbereichs (11) hat.

9. Säule nach einem der Ansprüche 1 bis 8, **dadurch gekennzeichnet, dass** in jedem Austauschbereich (5, 10, 11) die Füllkörpermodule entweder direkt oder mit Zwischenschaltung von Querstreben bildenden Elementen übereinander gestapelt sind.

10. Säule nach einem der Ansprüche 1 bis 9, **dadurch gekennzeichnet, dass** sie Teil einer doppelten Luftzerlegungssäule (1) ist.

**Claims**

1. Column with packing for heat and/or mass transfer between a descending liquid and a rising gas, of the type comprising at least one exchange section (5, 9, 10, 11) defined between an associated upper liquid distributor (4, 6, 7, 8) and a lower inlet/outlet for fluid (21, 23) or an associated lower liquid distributor (7, 8), this exchange section comprising an upper portion (5A, 9A, 10A, 11A) and, below the latter, another portion (5B, 9B, 10B, 11B), **characterized in that** the upper packing portion (5A, 9A, 10A, 11A) of at least one exchange section (5, 9, 10, 11) comprises at least one packing module which has a smaller number of transfer units than at least one packing module of the other packing portion (5B, 9B, 10B, 11B) of the same exchange section.

2. Column according to Claim 1, **characterized in that** the said module of the said upper portion (5A, 9A, 10A, 11A) differs from the said module of the said other portion (5B, 9B, 10B, 11B) of the same exchange section by at least one of the following factors:

   - its intrinsic density;
   - its structure;

   - its mean density over the transverse section of the column; and
   - its height.

3. Column according to Claim 2, **characterized in that** the said factor is the mean density, and **in that** the said upper portion (5A) occupies only a fraction of the transverse section of the column, located under the jets of liquid coming from the said upper distributor (4).

4. Column according to any one of Claims 1 to 3, **characterized in that** the said packing portions (5A, 5B, 9A, 9B, 10A, 10B, 11A, 11B) are structured packaging portions.

5. Column according to Claim 4, **characterized in that** the said upper packing portion (10A) is a cross-corrugated packing portion, while the other packing portion is a ventilator-type packing portion (10B).

6. Column according to Claim 4, **characterized in that** the said upper packing portion (9A) is a cross-corrugated packing portion of relatively low density, while the other packing portion is a cross-corrugated packing portion of higher density, the packing modules possibly being offset angularly, especially by 90°, one with respect to the others around the vertical central axis (X-X) of the column.

7. Column according to any one of Claims 1 to 6, **characterized in that** the said upper packing portion (5A, 9A, 10A, 11A) consists of a single packing module.

8. Column according to Claims 2 and 7 taken together, **characterized in that** the said single module (11A) has a height lower than that of the modules of the other portion (11B) of the same exchange section (11).

9. Column according to any one of Claims 1 to 8, **characterized in that**, in each exchange section (5, 10, 11), the packing modules are stacked one on top of another, directly or with interposition of elements forming spacers.

10. Column according to any one of Claims 1 to 9, **characterized in that** it is part of a double air-distillation column (1).